# EUROPEAN PATENT SPECIFICATION

(11) **EP 3 640 450 B1**
(45) Date of publication and mention of the grant of the patent: **17.04.2024**
(21) Application number: 19191061.1
(22) Date of filing: 09.08.2019
(51) Int. Cl.: F02C 6/02, B64D 27/02

(54) **A METHOD OF OPERATING AN AIRCRAFT HYBRID GAS TURBOFAN AND RELATIVE HYBRID GAS TURBOFAN**
VERFAHREN ZUM BETREIBEN EINES HYBRID-TURBOFAN-TRIEBWERKS FÜR FLUGZEUGE UND ZUGEHÖRIGES HYBRID-TURBOFAN-TRIEBWERK
PROCÉDÉ DE FONCTIONNEMENT D'UN TURBORÉACTEUR À DOUBLE FLUX HYBRIDE D'AÉRONEF ET TURBORÉACTEUR À DOUBLE FLUX HYBRIDE ASSOCIÉ

(30) Priority: 17.08.2018 US 201862719375 P
(43) Date of publication of application: 22.04.2020
(73) Proprietor: RTX Corporation, Farmington, CT 06032 (US)
(72) Inventor: TERWILLIGER, Neil, Meriden, CT Connecticut 06450 (US); KUPRATIS, Daniel Bernard, Wallingford, CT Connecticut 06492 (US); ROMERO, Michael M., Manchester, CT Connecticut 06042 (US)
(74) Representative: Dehns

(56) References cited:
- EP-A2- 1 728 990
- EP-A2- 2 452 876
- US-A1- 2017 226 934
- A. V. Lukovnikov ET AL: "THE HYBRID PROPULSION SYSTEMS FOR THE ADVANCED AIRCRAFT", , 7 December 2014 (2014-12-07), pages 1-5, XP055675057, St. Petersburg, russia Retrieved from the Internet: URL:https://www.icas.org/ICAS_ARCHIVE/ICAS 2014/data/papers/2014_0820_paper.pdf [retrieved on 2020-03-10]

## Description

### BACKGROUND

The present disclosure relates generally to multiple engine gas turbine systems, and more particularly to a power-assist system in which power is transferred between an auxiliary power unit (APU) and a high spool of a primary engine.

Conventional aircraft turbine engines remain on during descent and idle to provide pressurized cabin air and avoid the need for in-flight restart. The idle mode requires fuel burn sufficient to ensure a self-sustaining engine. A need exists to reduce the amount of fuel needed during idle to improve engine economics.

EP2452876A2 discloses a prior art aircraft hybrid gas turbofan according to the preamble of claim 4.

A.V. Lukovnikov et al: "The Hybrid Propulsion Systems for the Advanced Aircraft", 7 December 2014, pages 1-5, XP055675057, and EP1728990A2 disclose other aircraft hybrid gas turbofan prior art systems.

### SUMMARY

In an aspect, a method of operating an aircraft hybrid gas turbofan is provided as set forth in claim 1.

In another aspect, an aircraft hybrid gas turbofan is provided as set forth in claim 4.

Features of embodiments of the invention are set forth in the dependent claims.

The present summary is provided only by way of example, and not limitation. Other aspects of the present disclosure will be appreciated in view of the entirety of the present disclosure, including the entire text, claims, and accompanying figures.

### BRIEF DESCRIPTION OF THE DRAWINGS

FIG. 1 is a schematic diagram of a gas turbine engine power assist system in which a secondary gas turbine engine boosts power to a primary gas turbine engine of an aircraft through a power linkage including a generator and motor.
FIG. 2 is a schematic diagram of an embodiment of a gas turbine engine power assist system in which the secondary gas turbine engine boosts power to the primary gas turbine engine through a power linkage, which provides compressed air from the secondary gas turbine engine to a high pressure turbine of the primary gas turbine engine.
FIG. 3 is another embodiment of a gas turbine engine power assist system in which the secondary gas turbine engine boosts power to the primary gas turbine engine through the power linkages of FIGS. 1 and 2.
FIG. 4 is a graphical representation of fuel flow reduction to the primary gas turbine engine with power boost to the primary gas turbine engine provided by the secondary gas turbine engine.
FIG. 5 is a graphical representation of improved fuel flow reduction over FIG. 4 obtainable when environmental control system requirements of the primary gas turbine engine are removed.
FIG. 6 is a graphical representation of net fuel reduction with power supplementation to the primary gas turbine engine, accounting for fuel needed to generate supplemental power.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope of the invention. The figures may not be drawn to scale, and applications and embodiments of the present invention may include features and components not specifically shown in the drawings.

### DETAILED DESCRIPTION

The present disclosure provides several modes of providing power assist to a high spool of a primary gas turbine engine to enable a reduced fuel flow during an idle mode of operation, and particularly, during descent of an aircraft. Primary gas turbine engines on an aircraft are kept on during descent to maintain minimum air pressurization needed for an aircraft environmental control system (ECS) and to remain available for operation if needed. Significant fuel flow inputs are necessary to keep an engine on during descent. The engine can remain on with minimum pressurization maintained at a reduced fuel flow if the power to the engine is supplemented. The present disclosure is directed to operation of an aircraft hybrid gas turbofan in which a secondary gas turbine engine, such as an auxiliary power unit (APU), is used to provide supplemental power to the primary gas turbine engine to provide a sub-idle descent mode of operation. In one mode, the APU drives a generator, which supplies electrical energy to a motor used to boost power to the high spool of the primary engine. In another mode, the APU provides compressed air into a turbine section of the primary engine to provide high spool torque. In yet another mode, the APU provides both electric power to boost the high spool and compressed air to the turbine section to increase high spool torque. While fuel input is required to power the APU, each power assist mode can result in a net fuel savings. Additionally, the same architecture provided for supplementing power to the primary engine via generator/motor can be used in reverse for supplementing power to the APU. When the primary engine is operating at high power, the power transfer can be reversed, with the high spool (or low spool) on the primary engine boosting a shaft of the APU via a generator and motor. Such power transfer can improve APU efficiency, such that the APU can remain on or spooled up during flight and available for service on demand.

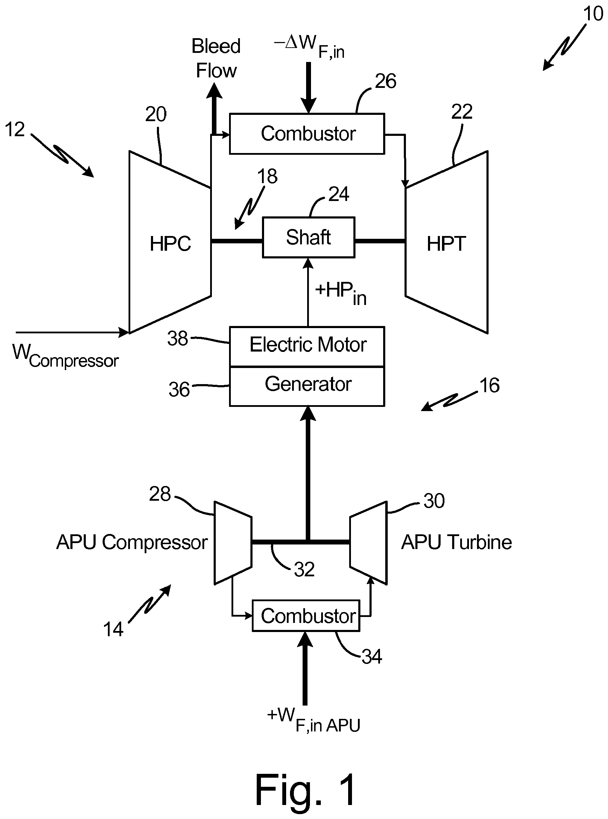

FIG. 1 is a schematic diagram of a gas turbine engine power assist system 10, which includes primary engine 12 and secondary engine 14. Primary and secondary engines 12 and 14 are gas turbine engines. Primary engine 12 can be an aircraft propulsion engine, and secondary engine 14 can be an aircraft APU. Primary engine 12 and secondary engine 14 are interconnected by power linkage 16 through which power can be transferred between primary engine 12 and secondary engine 14.

Primary engine 12 can be a multi-spool engine, having at least a low pressure spool and high pressure spool as known in the art. For simplicity, only high pressure spool 18 is illustrated. High pressure spool 18 includes high pressure compressor (HPC) 20 and high pressure turbine (HPT) 22 mounted on shaft 24. Although not illustrated, it will be understood by one of ordinary skill in the art that the low pressure spool can carry a fan, low pressure compressor, and low pressure turbine. Primary engine 12 is a Brayton cycle engine wherein a mixture of fuel and compressed air from HPC 20 is ignited in combustor 26 to drive rotation of HPT 22 and thereby HPC 20 via shaft 24.

Like primary engine 12, secondary engine 14 can be a gas turbine engine. As illustrated, secondary engine 14 includes compressor 28 and turbine 30 mounted on shaft 32. A mixture of fuel and compressed air from compressor 28 is ignited in combustor 34 to drive turbine 30 and thereby compressor 28 via shaft 32. Secondary engine 14 can additionally include a power turbine (not shown) mounted on a power shaft, which is rotationally independent from shaft 32. Secondary engine 14 can provide power for a range of peripheral aircraft functions independent from propulsion or from the operation of primary engine 12. For example, secondary engine 14 can be used for power generation, for cabin air circulation, and/or to drive mechanical actuation of aircraft components. Secondary engine 14 can have a number of configurations or cycles (e.g., wankel cycle) and is not limited to the gas turbine engine depicted.

Primary engine 12 and secondary engine 14 are connected by power linkage 16, which includes generator 36 and motor 38. When primary engine 12 is operating in an idle mode, fuel flow to primary engine 12 can be reduced and power extracted from secondary engine 14 can be provided to primary engine 12 via power linkage 16 to boost high pressure spool 18. As used herein, an idle mode of operation refers to a rotational speed of the high spool 18 that is greater than the minimum rotational speed required to achieve starting of the engine and is less than the rotational speed (N2) associated with the maximum idle thrust of primary engine 12 set by the airframer. Idle is based on the engine's minimum limiting factor (e.g., minimum N1, N2, fuel air ratio, ECS bleed, etc.). Power assist system 10 can be used to supplement power to primary engine 12 during descent of the aircraft as well as during ground idle and other flight idle operations. As illustrated, rotational energy of shaft 32 of secondary engine 14 is transferred to shaft 24 on high pressure spool 18 of primary engine 12 via generator 36 and motor 38. Generator 36 and motor 38 can be a combined motor-generator capable of operating in a reverse direction (i.e., transferring power from primary engine 12 to secondary engine 14). Generator 36 and motor 38 can be separate components coupled via an electrical connection (not shown). Generator 36 is a rotary generator driven by shaft 32 to produce electrical power, which is provided to motor 38. Motor 38, in turn, uses the electrical power to drive shaft 24 of high pressure spool 18. The power shaft (not shown) of secondary engine 14 can be used to boost high pressure spool 18 of primary engine 12 via generator 36 and motor 38.

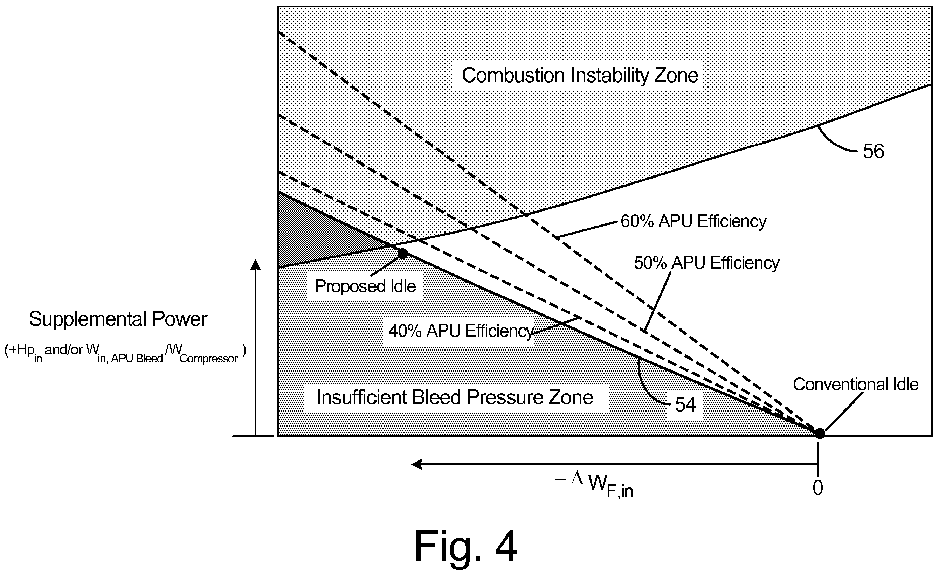

As illustrated, during operation of power assist system 10, fuel flow into combustor 26 of primary engine 12 is reduced, as indicated by -ΔW_{F, in}, which represents a change in fuel flow from a conventional idle mode (i.e., idle without power assist). Fuel flow input (+W_{F, in APU}) to secondary engine 14 is required to operate secondary engine 14. Secondary engine 14 provides supplementary horsepower (+HPᵢₙ) to primary engine 12 via generator 36/motor 38. Supplemental power provided to primary engine 12 can cause high pressure spool 18 to rotate at a higher speed than a conventional idle speed. The increased speed of high pressure spool 18 can improve operation safety (i.e., improve compressor 20 operating stability margin) of primary engine 12 and response time from idle, allowing for a faster spool up time (time required to accelerate and increase fuel flow rate) if additional thrust output by engine 12 becomes necessary. Although fuel flow in secondary engine 14 is increased, a net fuel reduction can be achieved, as is discussed further with respect to FIGS. 4-6.

The architecture of power linkage 16 can be used in reverse for boosting power to secondary engine 14. In some operations, it may be beneficial to have a hybrid electric configuration in which an APU (secondary engine 14) is available on an as-needed basis throughout an entire flight. As such, it may be desired to run APU 14 at idle during the entire flight or keep APU 14 spooled up, but off, to ensure APU 14 is ready when needed. To reduce the amount of fuel needed to run APU 14 at idle or to keep APU 14 spooled up, power can be transferred from primary engine 12 to APU 14 when primary engine 12 is operating at high power. In this configuration, power assist system 10 is operated in reverse with high pressure spool 18 on primary engine 12 driving a combined motor-generator. Generator 36 provides electric power to motor 38, which in turn drives shaft 32 of APU 14. Such power transfer can reduce the idle fuel burn of APU 14, such that APU 14 can remain on during flight and ready to respond on demand while reducing fuel usage, or keep APU 14 spooled up to reduce reaction time at start-up. Boosting power to secondary engine 14 can be supplied by the low spool of primary engine 12 through separate power linkage (not shown).

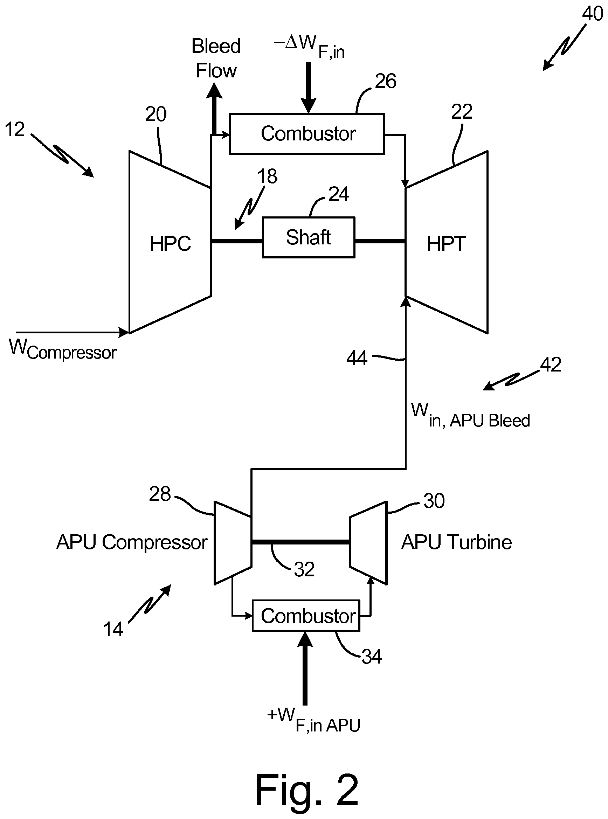

FIG. 2 is a schematic diagram of an embodiment of a gas turbine engine power assist system 40 in which secondary gas turbine engine 14 provides compressed air to primary gas turbine engine 12. Power assist system 40 is identical to power assist system 10 with the exception of the power linkage. Power assist system 40 replaces electrical/mechanical linkage 16 with a mechanical power linkage 42. Power linkage 42 includes bleed air conduit 44, which connects compressor 28 of secondary engine 14 to HPT 22 of primary engine 10. Compressed bleed air from compressor 28 is provided directly into HPT 22 to provide torque to high pressure spool 18 and thereby boost power to primary engine 12 to maintain pressurization and operation at a reduced fuel flow (-ΔW_{F, in}). Although fuel input (+W_{F, in APU}) is required to operate secondary engine 14, a net fuel savings can still be realized using power assist system 40. In addition, the capability for bleeding off compressor air from secondary engine 14 could facilitate operation of secondary engine 14 in certain operating conditions, as such architecture allows for rematching each participating engine 12, 14 in the power assist system. Many APU configurations operate a load compressor separate from the cycle compressor 28 shown, which could alternatively provide a source of bleed air. As previously discussed, secondary engine 14 is not limited to the embodiment shown. It will be understood by one of ordinary skill in the art that the source of bleed air can vary depending on the configuration of the APU.

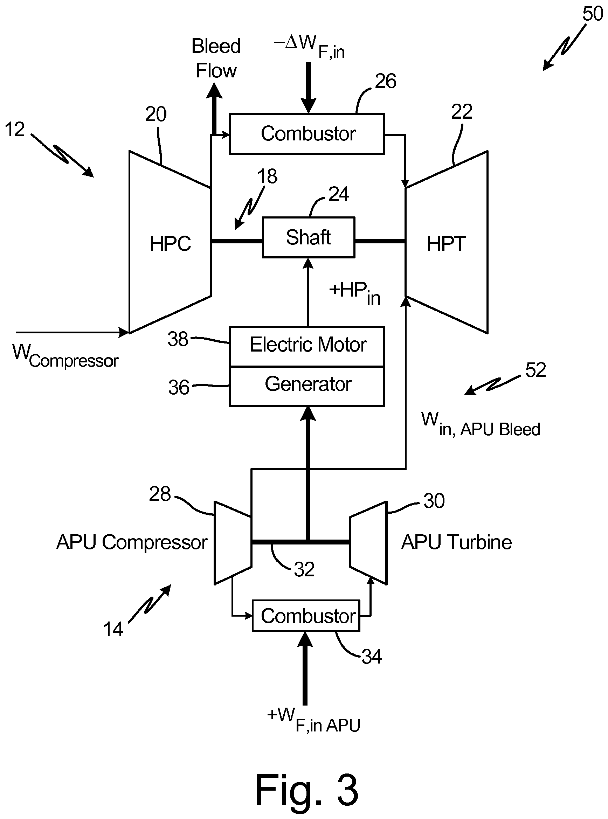

FIG. 3 is an alternative embodiment of a gas turbine engine power assist system 50 in which secondary gas turbine engine 14 supplements power to primary gas turbine engine 12 by providing compressed air to HPT 22 and by driving shaft 18 via generator 36 and motor 38. Power assist system 50 is identical to power assist systems 10 and 40 with the exception of the power linkage. Power assist system 50 includes power linkage 52, which is a combination of power linkage 16 and power linkage 42. Power linkage 52 can simultaneously deliver compressed air to HPT 22 to provide high spool torque while also driving shaft 18 via generator 36/motor 38. Additional benefit may be realized by combining the supplemental power provided by compressed air with rotational power provided by generator 36/motor 38 in some operations. Both power linkages influence the operating line on HPC 20. While the addition of compressed air into HPT 22 can have an adverse impact on the operating line, the rotational energy provided by motor 38 can have a positive impact on the operating line. Therefore, a balance between the two may provide a more efficient power boost to primary engine 12.

FIGS. 4-6 provide graphical representations of fuel flow reduction using power assist systems 10, 40, and/or 50. FIG. 4 illustrates the effect of supplementing power to primary engine 12 using any of the power assist systems 10, 40, or 50. FIG. 4 shows ability to reduce fuel flow to primary engine 12 as compared to fuel flow at conventional idle (-ΔW_{F, in}) by increasing horsepower (+HPᵢₙ) provided by secondary engine 14 via generator 36/motor 38 and/or increasing high spool torque provided by secondary engine 14 via compressed air from compressor 28 (shown as ratio of bleed air from compressor 28 to airflow entering compressor 20, W_{in, APU Bleed} / W_{Compressor}). The conventional gas turbine idle point is the nominal fuel flow a gas turbine would operate at without boosting from secondary engine 14.

FIG. 4 is a graphical representation of fuel flow reduction to the primary gas turbine engine with power boost to the primary gas turbine engine provided by the secondary gas turbine engine. FIG. 4 illustrates a conventional gas turbine engine idle point, in which the core supplies pressurized bleed air for the aircraft ECS (e.g., passenger cabin air). As fuel flow to primary engine 12 is reduced, supplemental power must be provided to maintain minimum bleed air pressurization, identified by line 54. Insufficient supplemental power, i.e., anything below line 54 falls within an Insufficient Bleed Pressure Zone for the aircraft ECS. Additionally, supplemental power provided to primary engine 12 relative to fuel flow into primary engine 12 must fall below a lean blowout (LBO) limit or a Combustion Instability Zone, identified by line 56. Excessive supplemental power, i.e., anything above line 56, falls within the Combustion Instability Zone in which a fuel-to-air ratio is reduced enough to cause the combustor flame to become unstable or extinguished. In other words, excessive supplemental power combined with excessive reduction in primary engine 12 fuel flow (-ΔW_{F, in}) can reduce combustor 26 fuel-to-air ratio below sustainable combustion. The proposed idle location using power assist systems 10, 40, 50 can lie near the intersection of combustion instability zone line 56 and the minimum bleed air pressurization line 54, preferably providing a safety margin between the proposed idle location and line 56. In some embodiments, the proposed idle location is preferably on or near the minimum bleed air pressurization line 54 to avoid using fuel and supplemental power to pressurize air above what is required.

The relationship between fuel flow and supplemental power provided to primary gas turbine engine 12 will vary for each power assist system 10, 40, 50. The graph of FIG. 4 is intended to provide a simplified example of the power assist used during a descent idle mode as disclosed herein. It will be understood by one of ordinary skill in the art that modeling will be required for each power assist system 10, 40, 50, which can include variations in primary and secondary engines 12, 14 and power linkages 16, 42, 52, to identify an ideal fuel/supplemental power input combination. Furthermore, it will be understood that models will look different depending on the mode of operation (i.e., flight idle or ground idle). While the present disclosure provides power assist systems which can result in a net reduction of fuel consumption, the goal of the power assist system is not necessarily to obtain a reduction in fuel flow, but to improve readiness or response time of primary engine 12 in the event that additional thrust output is necessary. In some embodiments, power assist system 10, 40, 50 may be used to boost spool speed or reduce acceleration time without producing a net fuel flow reduction.

Additional configurations may be considered in optimization of power assist systems 10, 40, 50. For instance, an increased benefit may be realized by rescheduling HPC vanes when power supplement is available. In some embodiments, vanes of HPC 20 may be used to restrict airflow to shift Combustion Instability Zone line 56. The incidence angles of the HPC vanes can be changed to allow more or less airflow depending on the speed of high pressure spool 18. As the vanes are closed, airflow from HPC 20 can be reduced, which allows for an additional reduction in primary engine 12 fuel flow before reaching the LBO limit. By restricting airflow from HPC 20, the fuel-to-air ratio can be adjusted to optimize operation of power assist systems 10, 40, 50.

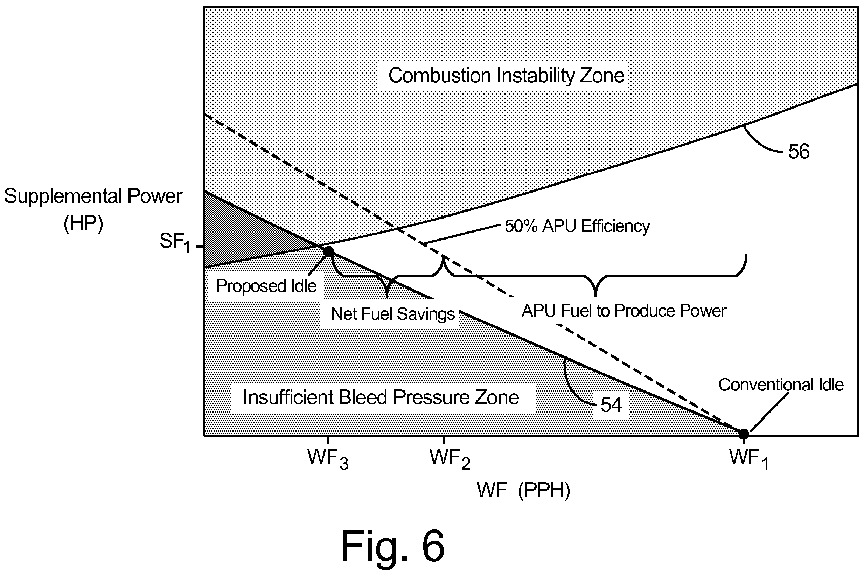

The efficiency of secondary engine 14 can also significantly impact the potential for net fuel savings achieved by power assist systems 10, 40, 50. FIG. 4 includes varying APU 14 efficiency lines. As will be discussed further with respect to FIG. 6, net fuel savings are dependent in part on the fuel efficiency at which APU 14 operates. Along the APU efficiency line, power assist systems 10, 40, and 50 are energy neutral (i.e., the amount fuel (+ΔW_{F, in APU}) needed to generate supplemental power is balanced by the amount by fuel reduction (-ΔW_{F, in}) to primary engine 12). Net fuel savings are only achieved to the left of each APU efficiency line, with greater fuel savings realized the farther left the idle position is located from the APU efficiency line. As illustrated in FIG. 4, the proposed idle location would result in a slight net fuel savings with supplemental power provided by secondary engine 14 operating at 40% efficiency, and improved net fuel savings with secondary engines 14 operating at 50% and 60% efficiency.

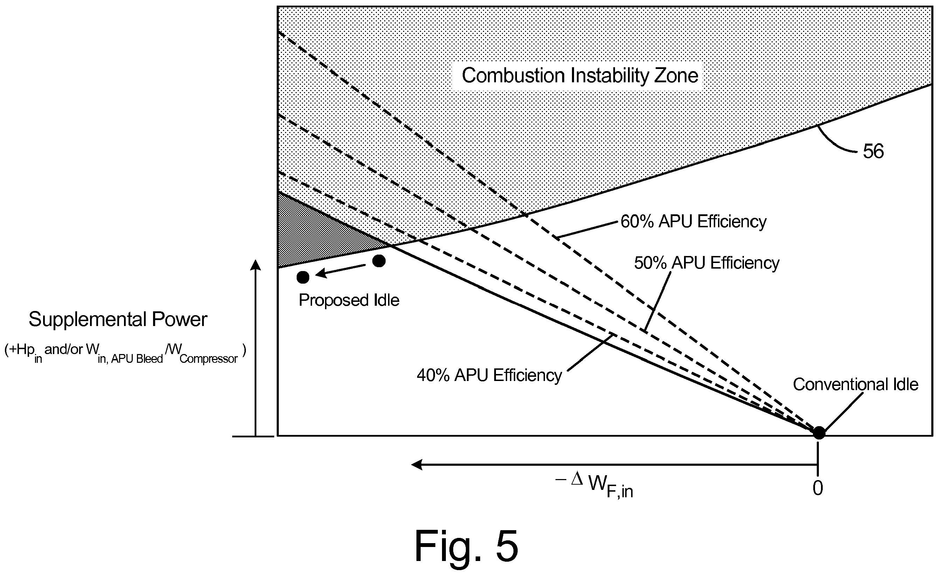

FIG. 5 is a graphical representation of improved fuel reduction obtainable when aircraft ECS requirements of primary engine 12 are removed. In some embodiments, pressurized air for the aircraft ECS can be supplied by a source of airflow other than the core or primary engine 12. Therefore, there is no requirement for primary engine 12 to supply pressurized bleed air for the aircraft ECS. In such embodiments, the idle location can be moved further to the left in fuel flow to a new proposed idle operation as there is no requirement to meet a minimum bleed air pressurization. Supplemental power provided to primary engine 12 relative to fuel flow into primary engine 12 must fall below the Combustion Instability Zone line 56, and sufficient supplemental power (e.g., +HPᵢₙ) is still provided by secondary engine 14 to maintain an ideal idle speed as necessary to reduce the time primary engine 12 takes to spool up if additional thrust is needed.

FIG. 6 is a graphical representation of an example of net fuel reduction with power supplementation to the primary gas turbine engine during descent of the aircraft, accounting for secondary engine 14 fuel needed to generate supplemental power and primary engine 12 fuel. FIG. 6 represents model results for power assist system 10 for particular models of a turbofan engine 12 and APU 14. As illustrated in FIG. 6, for APU 14 operating at 50% efficiency a power input of SP₁ would require a fuel reduction of approximately WF₁₋₂ (reduction from WF₁ to WF₂) fuel flow to primary engine 12 to be energy neutral, as indicated by the 50% APU energy efficiency. The reduction of WF₁₋₂ accounts for the amount of fuel needed by APU 14 to produce supplemental power for primary engine 12. Any further reduction of fuel flow to primary engine 12 results in a net fuel savings of WF₂₋₃ (reduction from WF₂ to WF₃) as indicated in FIG. 6. This is a reduction of about five percent in net fuel consumption, with a reduction of fuel flow to primary engine 12 of greater than ten percent over a conventional idle mode in which power to primary engine 12 is not boosted by secondary engine 14. As previously discussed, the net fuel savings is dependent on the efficiency of APU 14 with lower APU efficiencies resulting in lower net fuel savings.

In some embodiments, net fuel flow may be unchanged or even increased depending on the system configuration and goal of operation. The primary goal of using power assist systems 10, 40, and 50 can be to improve readiness or response time of primary engine 12 in the event that additional thrust output is necessary. While use of power assist systems 10, 40, and 50 as disclosed can result in a net reduction in fuel flow, in some embodiments, power assist systems 10, 40, 50 may be used to boost spool speed or reduce acceleration time without producing a reduction in net fuel flow. Using power assist system 50, a method of improving response time of primary engine 12 can include increasing supplementary horsepower (+HPᵢₙ) to primary engine 12 via power linkage 16 and reducing a bleed flow ratio of bleed air from compressor 28 to airflow entering compressor 20, W_{in, APU Bleed} / W_{Compressor} via power linkage 42 in a controlled time variant manner concurrent with an increase in combustor 26 fuel flow (+ΔW_{F, in}) in primary engine 12.

Power assist systems 10, 40, and 50 provide the capability for reducing fuel requirements of primary engine 12 during an idle mode of operation, and particularly, during descent of the aircraft. A net fuel savings can be realized by supplementing power to high pressure spool 18 via generator 36/motor 38 driven by secondary engine 14 and/or compressed bleed air from secondary engine compressor 28. In addition, supplemental power provided to primary engine 12 can increase the idle speed above the conventional idle speed providing safer engine operating conditions (i.e., improved compressor 20 operating stability margin) and reduced spool up time should additional thrust output by primary engine 12 be necessary. Power assist system 10 provides the additional benefit of being capable of operating in reverse, transferring power from primary engine 12 to secondary engine 14 to improve secondary engine 14 efficiency, such that the secondary engine 14 can remain on during flight and available for service as needed.

While the invention has been described with reference to an exemplary embodiment(s), it will be understood by those skilled in the art that various changes may be made without departing from the scope of the invention. Therefore, it is intended that the invention not be limited to the particular embodiment(s) disclosed, but that the invention will include all embodiments falling within the scope of the appended claims.

## Claims

1. A method of operating an aircraft hybrid gas turbofan, the method comprising:
providing supplemental power to a primary gas turbine engine (12) during a mode of operation of the primary gas turbine engine (12), wherein providing supplemental power comprises boosting the high spool (18) of the primary gas turbine engine (12) using a secondary gas turbine engine (14) via a first power linkage (42; 52) connecting the primary and secondary gas turbine engines (12, 14), and wherein the primary gas turbine engine (12) is a propulsion engine and the secondary gas turbine engine (14) is an auxiliary power unit (APU);
**characterised in that**:
providing supplemental power to the primary gas turbine engine (12) occurs during descent of the aircraft;
the method further comprises reducing a fuel flow to the primary gas turbine engine (12) when supplemental power is provided to the primary gas turbine engine (12) by the APU; and
boosting the high spool (18) of the primary gas turbine engine (12) comprises a first power supplementation method, wherein the first power supplementation method comprises:
generating compressed air in the secondary gas turbine engine (14); and
providing the compressed air directly into a turbine (22) of the high spool (18) of the primary gas turbine engine (12) to provide high spool torque.

2. The method of claim 1, wherein boosting the high spool (18) of the primary gas turbine engine (12) comprises a second power supplementation method;
wherein the second power supplementation method comprises:
driving a generator (36) with the secondary gas turbine engine (14);
coupling a motor (38) to the high spool (18); and
powering the motor (38) via the generator (36).

3. The method of claim 1 or 2, wherein boosting the high spool (18) of the primary gas turbine engine (12) comprises providing supplemental power to the primary gas turbine engine (12) in an amount greater than 100 horsepower.

4. An aircraft hybrid gas turbofan, comprising:
a primary gas turbine engine (12) having a high spool (18), wherein the primary gas turbine engine (12) is a propulsion engine;
a secondary gas turbine engine (14), wherein the secondary gas turbine engine (14) is an auxiliary power unit (APU); and
a power linkage (42; 52) between the high spool (18) of the primary gas turbine engine (12) and the APU;
**characterised in that**:
the power linkage (42; 52) includes a mechanical coupling comprising a bleed air conduit (44) connecting a compressor section of the APU to a core gas path of a turbine (22) of the high spool (18).

5. The aircraft hybrid gas turbofan of claim 4, wherein the power linkage (52) includes a combined motor/generator (36; 38) configured to transfer power between the high spool (18) of the primary gas turbine engine (12) and the APU.

## Patentansprüche

1. Verfahren zum Betreiben eines Hybrid-Gasturbofans für Flugzeuge, wobei das Verfahren Folgendes umfasst:
Bereitstellen zusätzlicher Leistung für ein primäres Gasturbinentriebwerk (12) während eines Betriebsmodus des primären Gasturbinentriebwerks (12), wobei das Bereitstellen zusätzlicher Leistung Boosten der Hochspule (18) des primären Gasturbinentriebwerks (12) unter Verwendung eines sekundären Gasturbinentriebwerks (14) über eine erste Leistungsverbindung (42; 52), die das primäre und das sekundäre Gasturbinentriebwerk (12, 14) verbindet, umfasst und wobei das primäre Gasturbinentriebwerk (12) ein Antriebstriebwerk ist und das sekundäre Gasturbinentriebwerk (14) ein Hilfsaggregat (auxiliary power unit - APU) ist;
**dadurch gekennzeichnet, dass**:
das Bereitstellen zusätzlicher Energie für das primäre Gasturbinentriebwerk (12) während des Sinkflugs des Flugzeugs erfolgt;
das Verfahren ferner Reduzieren eines Brennstoffflusses zu dem primären Gasturbinentriebwerk (12) umfasst, wenn dem primären Gasturbinentriebwerk (12) durch das APU zusätzliche Leistung bereitgestellt wird; und
das Boosten der Hochspule (18) des primären Gasturbinentriebwerks (12) ein erstes Leistungsergänzungsverfahren umfasst, wobei das erste Leistungsergänzungsverfahren Folgendes umfasst:
Erzeugen von komprimierter Luft in dem sekundären Gasturbinentriebwerk (14); und
Bereitstellen der komprimierten Luft direkt in eine Turbine (22) der Hochspule (18) des primären Gasturbinentriebwerks (12), um ein hohes Spulendrehmoment bereitzustellen.

2. Verfahren nach Anspruch 1, wobei das Boosten der Hochspule (18) des primären Gasturbinentriebwerks (12) ein zweites Leistungsergänzungsverfahren umfasst;
wobei das zweite Leistungsergänzungsverfahren Folgendes umfasst:
Antreiben eines Generators (36) mit dem sekundären Gasturbinentriebwerk (14);
Koppeln eines Motors (38) an die Hochspule (18); und Versorgen des Motors (38) mit Leistung über den Generator (36).

3. Verfahren nach Anspruch 1 oder 2, wobei das Boosten der Hochspule (18) des primären Gasturbinentriebwerks (12) Bereitstellen zusätzlicher Leistung für das primäre Gasturbinentriebwerk (12) in einer Größenordnung von mehr als 100 PS umfasst.

4. Hybrid-Gasturbofan für Flugzeuge, umfassend:
ein primäres Gasturbinentriebwerk (12), das eine Hochspule (18) aufweist, wobei das primäre Gasturbinentriebwerk (12) ein Antriebstriebwerk ist;
ein sekundäres Gasturbinentriebwerk (14), wobei das sekundäre Gasturbinentriebwerk (14) ein Hilfsaggregat (APU) ist; und
eine Leistungsverbindung (42; 52) zwischen der Hochspule (18) des primären Gasturbinentriebwerks (12) und dem APU;
**dadurch gekennzeichnet, dass**:
die Leistungsverbindung (42; 52) eine mechanische Kopplung beinhaltet, die eine Zapfluftleitung (44) umfasst, die einen Verdichterabschnitt des APU mit einem Kerngaspfad einer Turbine (22) der Hochspule (18) verbindet.

5. Hybrid-Gasturbofan für Flugzeuge nach Anspruch 4, wobei die Leistungsverbindung (52) einen kombinierten Motor/Generator (36; 38) beinhaltet, der dazu konfiguriert ist, Leistung zwischen der Hochspule (18) des primären Gasturbinentriebwerks (12) und dem APU zu übertragen.

## Revendications

1. Procédé de fonctionnement d'un turboréacteur à double flux hybride à gaz pour aéronef, le procédé comprenant :
la fourniture d'une puissance supplémentaire à un moteur à turbine à gaz primaire (12) pendant un mode de fonctionnement du moteur à turbine à gaz primaire (12), dans lequel la fourniture de puissance supplémentaire comprend la suralimentation du corps supérieur (18) du moteur à turbine à gaz primaire (12) à l'aide d'un moteur à turbine à gaz secondaire (14) par l'intermédiaire d'un premier système d'alimentation (42 ; 52) reliant les moteurs à turbine à gaz primaire et secondaire (12, 14), et dans lequel le moteur à turbine à gaz primaire (12) est un moteur de propulsion et le moteur à turbine à gaz secondaire (14) est une unité de puissance auxiliaire (APU) ;
**caractérisé en ce que** :
la fourniture d'une puissance supplémentaire au moteur à turbine à gaz primaire (12) a lieu pendant la descente de l'aéronef ;
le procédé comprend en outre la réduction d'un débit de carburant vers le moteur à turbine à gaz primaire (12) lorsqu'une puissance supplémentaire est fournie au moteur à turbine à gaz primaire (12) par l'APU ; et
la suralimentation du corps supérieur (18) du moteur à turbine à gaz primaire (12) comprend un premier procédé de supplémentation de puissance, dans lequel le premier procédé de supplémentation de puissance comprend :
la génération d'air comprimé dans le moteur à turbine à gaz secondaire (14) ; et
la fourniture de l'air comprimé directement dans une turbine (22) du corps supérieur (18) du moteur à turbine à gaz primaire (12) afin de fournir un couple de corps supérieur.

2. Procédé selon la revendication 1, dans lequel la suralimentation du corps supérieur (18) du moteur à turbine à gaz primaire (12) comprend un second procédé de supplémentation de puissance ;
dans lequel le second procédé de supplémentation de puissance comprend :
l'entraînement d'un générateur (36) par le moteur à turbine à gaz secondaire (14) ;
le couplage d'un moteur (38) au corps supérieur (18) ; et
l'alimentation du moteur (38) par l'intermédiaire du générateur (36) .

3. Procédé selon la revendication 1 ou 2, dans lequel la suralimentation du corps supérieur (18) du moteur à turbine à gaz primaire (12) comprend la fourniture d'une puissance supplémentaire au moteur à turbine à gaz primaire (12) supérieure à 100 chevaux.

4. Turboréacteur à double flux hybride à gaz pour aéronef, comprenant :
un moteur à turbine à gaz primaire (12) ayant un corps supérieur (18), dans lequel le moteur à turbine à gaz primaire (12) est un moteur de propulsion ;
un moteur à turbine à gaz secondaire (14), dans lequel le moteur à turbine à gaz secondaire (14) est une unité de puissance auxiliaire (APU) ; et
un système d'alimentation (42 ; 52) entre le corps supérieur (18) du moteur à turbine à gaz primaire (12) et l'APU ;
**caractérisé en ce que** :
le système d'alimentation (42 ; 52) comporte un couplage mécanique comprenant un conduit d'air de prélèvement (44) reliant une section de compresseur de l'APU à un trajet de gaz central d'une turbine (22) du corps supérieur (18).

5. Turboréacteur à double flux hybride à gaz pour aéronef selon la revendication 4, dans lequel le système d'alimentation (52) comporte un moteur/générateur combiné (36 ; 38) configuré pour transférer une puissance entre le corps supérieur (18) du moteur à turbine à gaz primaire (12) et l'APU.
